# FASCICULE DE BREVET EUROPEEN

(11) **EP 1 953 085 B1**
(45) Date de publication et mention de la délivrance du brevet: **12.05.2010**
(21) Numéro de dépôt: 08150648.7
(22) Date de dépôt: 25.01.2008
(51) Int. Cl.: B64D 15/12, B64D 41/00, B64D 15/00

(54) **Circuit d'alimentation en énergie électrique dans un aéronef pour des équipements électriques comprenant un circuit de dégivrage**
Stromversorgungsschaltkreis in einem Luftfahrzeug für die elektrischen Geräte einschließlich Enteisungsschaltkreis
Circuit for supplying electricity to the electrical equipment in an aircraft including an de-icing circuit

(30) Priorité: 31.01.2007 FR 0752986
(43) Date de publication de la demande: 06.08.2008
(73) Titulaire: HISPANO-SUIZA, 92700 Colombes (FR)
(72) Inventeur: Boudyaf, Rachid, 94140, Alfortville (FR); Stutz, Antoine Jean-Baptiste, 92120, Montrouge (FR)
(74) Mandataire: Joly, Jean-Jacques

(56) Documents cités:
- WO-A-97/00201
- WO-A-03/078248
- FR-A1- 2 281 273
- US-A- 2 566 618
- US-B1- 6 992 403

## Description

### Arrière-plan de l'invention

L'invention concerne l'alimentation en énergie électrique pour des équipements électriques d'un moteur d'aéronef et/ou de son environnement.

Le domaine d'application de l'invention est plus particulièrement celui des moteurs d'avion, notamment des moteurs à turbine à gaz. L'invention est toutefois aussi applicable à des moteurs d'hélicoptère.

Par équipements électriques d'un moteur d'aéronef ou de son environnement, on entend ici non seulement des équipements électriques utiles pour le fonctionnement même du moteur, mais aussi des équipements électriques associés à la nacelle du moteur, tels que par exemple des circuits électriques de dégivrage ou d'antigivrage (NAI pour "Nacelle Anti Icing") ou des actionneurs d'ouverture des capots de reverse (TRCOS pour "Thrust Reverse Cowl Opening System") ou des actionneurs électromécaniques d'inverseurs de poussée (ETRAC pour "Electrical Thrust Reverse Actuation Control") pour un moteur d'avion à turbine à gaz, voire même associés à la voilure portant le moteur, tels que par exemple des circuits électriques de dégivrage ou d'antigivrage de voilure d'avion.

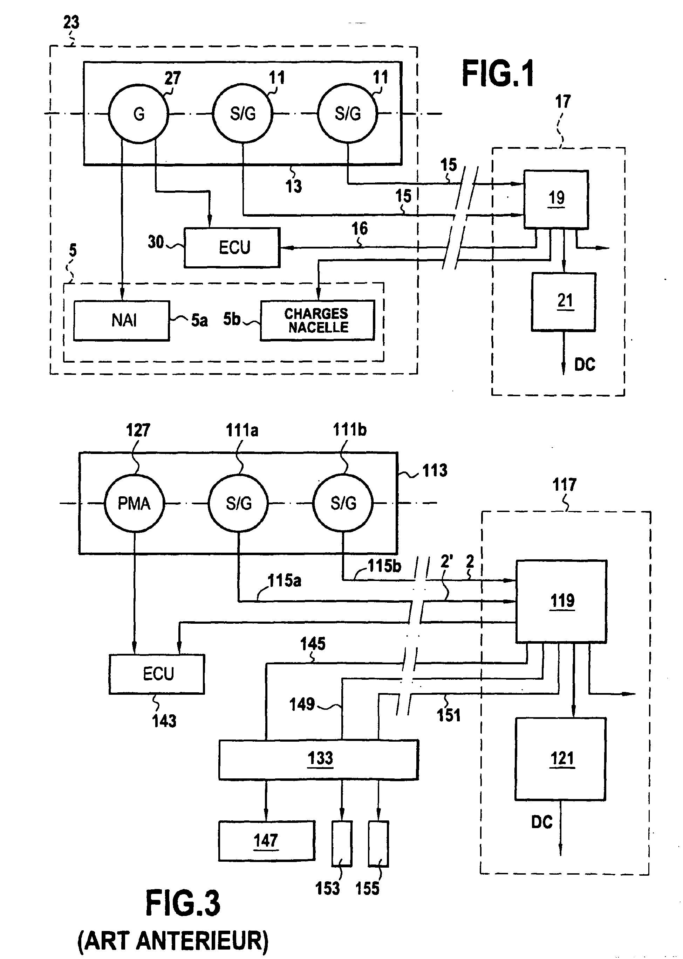

Un schéma traditionnel de production et de distribution d'énergie électrique à partir d'un moteur d'avion à turbine à gaz est montré sur la figure 3.

Deux générateurs 111a, 111b (voire plus de deux à titre de redondance ou d'optimisation de la génération de puissance électrique selon l'application considérée) sont montés sur un boîtier de transmission 113, ou boîtier d'entraînement d'accessoires qui est couplé mécaniquement à un arbre de turbine du moteur. Les générateurs 111a, 111b sont typiquement des démarreurs/générateurs, ou S/G (pour "Starter/Generator") comprenant une génératrice synchrone qui est associée à une excitation et qui fournit une tension alternative à fréquence variable en fonction du régime du moteur, l'ensemble excitatrice et génératrice synchrone étant commandé pour fonctionner en mode moteur synchrone au démarrage de la turbine.

Les tensions alternatives fournies par les générateurs 111a, 111b sont acheminées par des lignes 115a, 115b à un réseau électrique 117 de distribution d'énergie électrique à bord de l'avion, ou réseau de bord avion. Un circuit 119 de réseau de bord avion connecté aux lignes 115a, 115b fournit une tension alternative régulée, typiquement 115 ou 230 Vac, sur un ou plusieurs bus de distribution. Le circuit 119 alimente aussi un convertisseur de tension 121 qui fournit une tension continue régulée, typiquement 270 Vdc ou +/-270Vdc sur un ou plusieurs bus. Les tensions fournies par les circuits 119 et 121 alimentent différentes charges électriques à bord de l'avion, principalement dans la zone fuselage.

Au niveau du moteur, un module 143 de régulation électronique du moteur à pleine autorité, ou ECU (pour "Engine Control Unit") est alimenté par un générateur 127 tel qu'un générateur à aimants permanents, ou PMA (pour "Permanent Magnet Alternator") monté sur le boîtier de transmission 113. L'ECU 143 est relié également à l'un des circuits 119, 121, par exemple le circuit 119 de tension alternative régulée, pour pouvoir être alimenté correctement tant qu'un régime moteur suffisant n'a pas été atteint pour assurer la fourniture par le PMA 127 de l'énergie électrique requise, ou en cas de défaut du PMA. L'ECU 143 utilise l'énergie électrique reçue pour permettre le fonctionnement de ses composants et exciter différents éléments du moteur tels que des sondes ou capteurs, des actionneurs ou des servo-valves requérant une puissance électrique limitée.

Il y a une tendance actuelle à substituer de plus en plus l'énergie électrique à l'énergie hydraulique pour actionner différents équipements électriques d'un moteur d'aéronef ou de son environnement. Par exemple, certains avions sont équipés d'inverseurs de poussée à actionnement électrique 147. Ainsi, le circuit comporte des convertisseurs AC/DC 133 dont les entrées sont reliées au réseau de bord 117 par des lignes d'alimentation électrique 145, 149, 151 et dont les sorties sont reliées à un tel inverseur de poussée électrique 147 ainsi qu'à des équipements statiques, telles que de circuits 153, 155 de dégivrage de la nacelle du moteur et de la voilure portant le moteur.

L'acheminement de l'énergie électrique à partir du réseau de bord d'un aéronef vers des charges externes au fuselage par des lignes qui doivent être soigneusement sécurisées et isolées représente une masse et un encombrement importants, risquant d'être dimensionnants voire prohibitifs si le nombre d'équipements à alimenter augmente et présente une perte d'énergie non négligeable.

Un dispositif anti-givrage d'hélice d'avion alimenté, indépendamment du réseau électrique de bord de l'avion, par un générateur ayant une partie solidaire en rotation de l'hélice est décrit dans les documents FR 2 281 273 et WO 03/078248.

### Objet et résumé de l'invention

L'invention a pour but de fournir un circuit d'alimentation en énergie électrique ne présentant pas un tel inconvénient et permettant d'alimenter plusieurs équipements électriques dans un moteur d'aéronef et/ou dans son environnement.

Ce but est atteint grâce à un circuit d'alimentation en énergie électrique dans un aéronef, comprenant un réseau de distribution d'énergie électrique à bord de l'aéronef alimentant des équipements électriques situés dans un moteur de l'aéronef ou dans l'environnement dudit moteur, lesdits équipements électriques comportent des charges nacelle reliées à un bus de distribution de tension électrique continue, ledit bus étant relié à un circuit convertisseur de tension alimenté par ledit réseau de distribution, et en ce qu'il comporte
un générateur d'alimentation intégré au moteur de l'aéronef pour alimenter un circuit de dégivrage, ledit circuit de dégivrage comportant au moins une résistance électrique destinée à dissiper l'énergie électrique éventuellement renvoyé sur le bus de distribution de tension électrique continue par au moins une partie des charges de la nacelle.

Le circuit selon l'invention permet ainsi de diminuer la longueur d'un câble acheminant l'énergie électrique vers le circuit de dégivrage. De plus, les câbles acheminant l'énergie électrique depuis le réseau de distribution d'énergie électrique à bord de l'aéronef peuvent présenter des faibles diamètres. Ceci permet d'optimiser la masse et l'encombrement des câbles. En outre, le circuit de dégivrage ne requiert pas de contraintes de régulation particulière et par conséquent le générateur d'alimentation peut présenter une configuration simple, robuste, peu encombrant et une masse réduite. De plus, il n'est pas nécessaire d'avoir une résistance électrique uniquement dédiée pour dissiper l'énergie électrique renvoyée sur le bus de distribution de tension électrique continue par les actionneurs électriques de la nacelle. Ceci réduit encore la masse et permet d'économiser l'énergie électrique.

Avantageusement, ledit circuit de dégivrage est directement relié audit générateur d'alimentation pour recevoir une tension alternative.

Le circuit selon l'invention permet ainsi au circuit de dégivrage (qui est purement résistif) de recevoir une tension alternative sans que cette tension alternative soit transformée en tension continue permettant ainsi de réduire les pertes d'énergie et de diminuer l'encombrement et la masse du circuit.

Selon une particularité de la présente invention, ledit générateur d'alimentation est un générateur à rotor bobiné dédié.

Ainsi, le générateur d'alimentation est simple et robuste.

Avantageusement, le circuit d'alimentation comporte un générateur à aimants permanents (PMA) couplé mécaniquement audit générateur d'alimentation, ledit générateur à aimants permanents étant destiné à alimenter au moins un module de régulation électronique du moteur (ECU).

Ainsi, le générateur à aimants permanents (PMA) alimentant le module de régulation électronique du moteur (ECU) est mutualisée avec le générateur alimentant le circuit de dégivrage.

Ledit au moins un module de régulation électronique du moteur (ECU) est relié audit générateur à aimants permanents pour recevoir une tension alternative. Ceci permet de simplifier le circuit.

Avantageusement, ledit générateur à aimants permanents alimente plusieurs modules de régulation électronique du moteur via un moyen d'interface.

Selon une particularité de la présente invention, le générateur d'alimentation est une machine à rotor bobiné et en ce que ledit générateur à aimants permanents correspond à un étage à aimants permanents de ladite machine à rotor bobiné. Ainsi, on peut gagner un arbre de sortie du relais d'accessoire.

Avantageusement, le circuit d'alimentation comporte :
- une entrée reliée au réseau de distribution d'énergie électrique pour recevoir une tension alternative, ledit convertisseur de tension étant relié à ladite entrée pour convertir la tension alternative fournie par le réseau de distribution d'énergie électrique en tension continue, et
- un interrupteur pour délivrer sur ledit bus de distribution de tension électrique continue une tension fournie par ledit convertisseur.

Le circuit permet ainsi de disposer d'un noeud de disponibilité d'énergie électrique sécurisée au niveau du moteur pour alimenter des charges intégrées au moteur ou situées à proximité, une seule liaison avec le réseau électrique de bord de l'aéronef étant suffisante pour assurer la disponibilité de l'énergie électrique sur le réseau électrique du moteur. De plus, le convertisseur peut être dimensionné pour l'ensemble des équipements électriques exceptés le dégivrage réduisant ainsi l'encombrement du convertisseur.

L'invention vise également un aéronef comportant un circuit d'alimentation selon les caractéristiques ci-dessus.

### Brève description des dessins

L'invention sera mieux comprise à la lecture de la description faite ci-après, à titre indicatif mais non limitatif, en référence aux dessins annexés sur lesquels :
- la figure 1 est une vue très schématique d'un système pour l'alimentation électrique et la commande d'équipements d'un moteur d'aéronef et de son environnement ;
- la figure 2 est une vue plus détaillée d'un mode de réalisation d'un dispositif d'alimentation en tension électrique selon l'invention ; et
- la figure 3, déjà décrite, représente très schématiquement un schéma connu de production et la distribution d'énergie électrique dans un aéronef.

### Description détaillée des modes de réalisation de l'invention

La figure 1 montre un schéma d'un circuit pour l'alimentation électrique et la commande d'un ensemble 5 comprenant des équipements électriques 5a et 5b d'un moteur d'aéronef et de son environnement, notamment un moteur d'avion à turbine à gaz.

Le circuit de la figure 1 comporte, au moins un générateur 11, tel qu'un S/G montés sur un boîtier de transmission (schématisé par 13) couplé mécaniquement à un arbre de turbine du moteur (non représenté). La tension alternative fournie par le ou les générateurs S/G 11 est acheminée par une ou des lignes 15 à un réseau électrique 17 de distribution d'énergie électrique à bord de l'avion, ou réseau électrique de bord d'avion. Un circuit 19 du réseau de bord avion fournit sur un ou plusieurs bus de distribution une tension alternative régulée typiquement 115 Vac ou 230 Vac ayant une fréquence variable en fonction de la vitesse de rotation de l'arbre de turbine. Le circuit 19 peut alimenter également un circuit convertisseur de tension 21 qui fournit une tension continue régulée, typiquement 270 Vdc ou ±270 Vdc sur un ou plusieurs bus. Les tensions produites par les circuits 19 et 21 alimentent différentes charges dans la zone de fuselage de l'avion.

Le circuit d'alimentation comporte, au niveau du moteur (schématisé par 23), un générateur d'alimentation 27 intégré au moteur de l'aéronef pour alimenter un circuit de dégivrage ou d'antigivrage (NAI) 5a d'une nacelle du moteur ou un circuit de dégivrage d'une voilure portant le moteur.

Ceci permet de diminuer la longueur du câble acheminant l'énergie électrique vers le circuit de dégivrage 5a. On notera que le câble relié au circuit résistive de dégivrage 5a présente un grand diamètre par rapport à ceux reliés à d'autres équipements électriques. Ainsi, le fait de diminuer la longueur de ce genre de câble permet de réduire la masse et l'encombrement des câbles nécessaires pour acheminer l'énergie électrique vers les charges externes au fuselage. De plus, le circuit de dégivrage 5a, en étant purement résistif, ne requiert pas de contraintes de régulation particulière et par conséquent le générateur d'alimentation 27, par exemple du type générateur à rotor bobiné dédié, peut présenter une configuration simple, robuste, peu encombrant et une masse réduite.

De plus, le circuit de dégivrage 5a peut être directement relié au générateur d'alimentation 27 pour recevoir une tension alternative. Ainsi, il n'est pas nécessaire d'avoir un convertisseur de tension pour transformer la tension alternative en tension continue. Ceci permet de réduire les pertes d'énergie et de diminuer l'encombrement et la masse du circuit d'alimentation.

En outre, au moins un module de régulation du moteur 30, ou ECU est également relié au générateur d'alimentation 27.

Avantageusement, l'ECU 30 reçoit une tension alternative depuis le générateur d'alimentation 27. En effet, ce dernier peut fournir à l'ECU 30, une énergie électrique alternative régulée ou variable en fonction du régime moteur. Par ailleurs, l'ECU 30 peut aussi être relié au circuit 19 de tension alternative par une ligne 16 pour pouvoir être alimentés correctement tant qu'un régime moteur suffisant n'a pas été atteint pour assurer la fourniture de l'énergie électrique requise par le générateur d'alimentation 27. En outre, le circuit 19 alimente également un ensemble d'équipements électriques 5b correspondant à des charges de la nacelle.

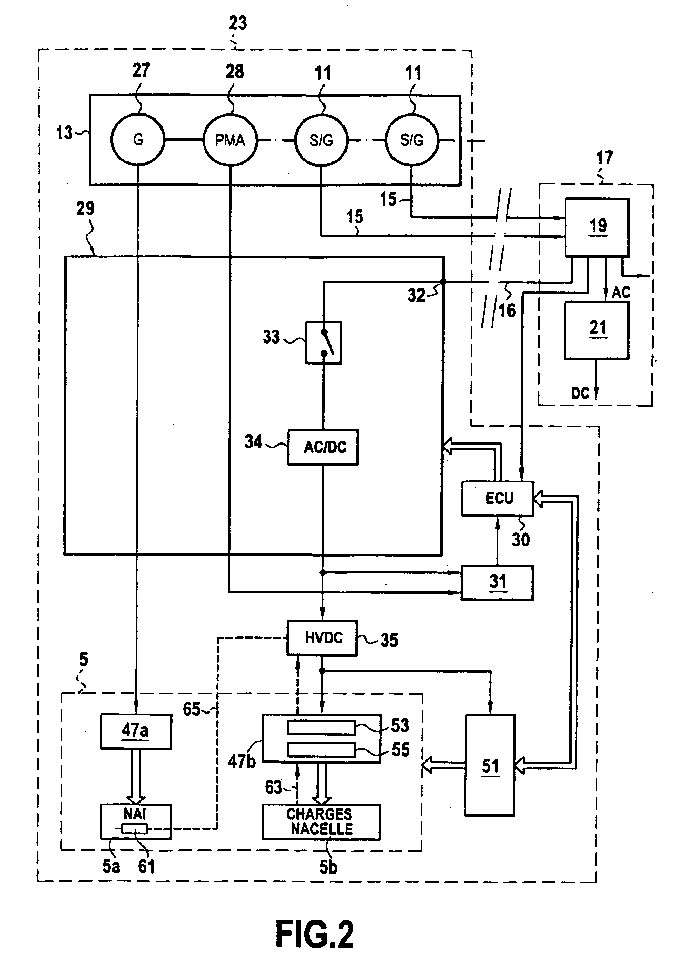

La figure 2 montre avec plus de détails, un mode de réalisation du circuit d'alimentation électrique selon l'invention.

Selon cet exemple, le circuit d'alimentation comporte un générateur à aimants permanents 28 (PMA) couplé mécaniquement au générateur d'alimentation 27. Ainsi, ce générateur à aimants permanents 28, qui est mutualisée avec le générateur d'alimentation 27, est destiné à alimenter un ou plusieurs ECU 30. Plus particulièrement, le générateur à aimants permanents 28 alimente le ou les ECU 30 via un moyen d'interface 31.

A titre d'exemple, afin de gagner un arbre de sortie du relais d'accessoire, le générateur d'alimentation 27 est une machine à rotor bobiné et le générateur à aimants permanents 28 correspond à un étage à aimants permanents de cette machine à rotor bobiné.

Par ailleurs, le circuit d'alimentation comporte un bus 28 de distribution de tension électrique continue et un dispositif d'alimentation 29 sécurisée faisant partie d'un réseau de distribution d'énergie électrique au niveau du moteur (schématisé par 23).

Le dispositif d'alimentation 29 comprend une entrée 32, un convertisseur de tension (AC/DC) 34, et un interrupteur 33.

L'entrée 32 est reliée au réseau 17 de distribution d'énergie électrique, plus particulièrement au circuit 19, pour recevoir une tension alternative. Le convertisseur de tension 34 est relié à cette entrée 32 pour convertir la tension alternative fournie par le réseau 17 de distribution d'énergie électrique en tension continue. Par ailleurs, l'interrupteur 33 est destiné à délivrer sur le bus 35 de distribution de tension électrique continue une tension fournie par le convertisseur 33.

Ainsi, le générateur d'alimentation 27 fournit une énergie électrique alternative régulée ou variable en fonction du régime moteur à l'ECU 30. Par ailleurs, l'interrupteur 33 permet de relier l'ECU 30 via le dispositif d'alimentation 29 au circuit 19 de tension alternative par la ligne 16 pour pouvoir être alimentés correctement tant qu'un régime moteur suffisant n'a pas été atteint pour assurer la fourniture de l'énergie électrique requise par le générateur d'alimentation 27.

On dispose donc selon cette configuration, d'un noeud d'alimentation électrique sécurisée. Le générateur d'alimentation 27 alimente directement en tension alternative un équipement de dégivrage 5a de la nacelle du moteur ou de la voilure. En revanche, la partie des équipements électriques correspondant à des charges nacelle 5b est reliée au bus 28 de distribution de tension continue.

Plus particulièrement, le ou les circuits de dégivrage 5a sont reliés au générateur d'alimentation 27 par l'intermédiaire d'un module 47a d'alimentation de dégivrage comprenant un dispositif de commutation et de protection commandé une unité centrale de commande 51 et/ou par l'ECU 30.

En outre, le circuit de dégivrage 5a comporte au moins une résistance électrique 61 destinée à dissiper l'énergie électrique éventuellement renvoyé sur le bus 35 de distribution de tension électrique continue par au moins une partie des charges 5b de la nacelle.

Par ailleurs, le bus 35 alimente un module 47b d'alimentation nacelle ainsi qu'un dispositif de commande comprenant l'unité centrale de commande 51.

Selon cet exemple, les modules 47a, 47b d'alimentation sont commandés par l'unité centrale de commande 51. Celle-ci est reliée à des capteurs (non représentés) associés à au moins certains des équipements électriques et est reliée en outre à l'ECU 30. Le module 47b d'alimentation nacelle est associé à des équipements électriques 5b de la nacelle.

Ce module d'alimentation 47b nacelle comprend un onduleur 53 et un circuit de commutation 55. L'onduleur 53 permet de délivrer aux équipements électriques 5b une tension alternative obtenue à partir de la tension continue délivrée par le bus 35 et le circuit de commutation 55 permet d'activer ces équipements électriques 5b. En effet, l'unité centrale de commande 51 commande le module 47b et en particulier le circuit de commutation 55 pour activer chacun des équipements 5b en fonction d'informations reçues de l'ECU 30 et/ou de capteurs associés aux équipements 5b.

On notera que, le circuit d'alimentation peut comprendre deux générateurs électriques d'alimentation 27 et éventuellement deux bus 35 de distribution de tension électrique continue, par exemple de type HVDC.

Ainsi, l'utilisation de deux générateurs permet de pallier la défaillance d'un générateur tout en conservant une alimentation sécurisée par la liaison 16 avec le réseau de bord de l'avion et de répartir la puissance électrique fournie.

La tension continue fournie sur le ou éventuellement les bus 35 peut être une tension régulée, par exemple à une valeur nominale de 270 Vdc ou +/- 270 Vdc, la régulation étant assurée par le circuit convertisseur AC/DC. En variante, la tension continue fournie sur le ou les bus 35 peut être non régulée, une plage de variation autour d'une valeur nominale étant alors tolérée, notamment en fonction des variations de tensions fournies par le circuit 19.

L'invention vise également un aéronef comportant un circuit d'alimentation en énergie électrique comprenant le réseau 17 de distribution d'énergie électrique à bord de l'aéronef alimentant des équipements électriques 5b situés dans le moteur de l'aéronef ou dans l'environnement du moteur et un générateur d'alimentation 27 intégré au moteur de l'aéronef pour alimenter un circuit de dégivrage 5a.

## Revendications

1. Circuit d'alimentation en énergie électrique dans un aéronef, comprenant un réseau (17) de distribution d'énergie électrique à bord de l'aéronef alimentant des équipements électriques (5b) situés dans un moteur de l'aéronef ou dans l'environnement dudit moteur et comprenant en plus un générateur d'alimentation (27) intégré au moteur de l'aéronef pour alimenter un circuit de dégivrage (5a), ledit circuit de dégivrage (5a) comportant au moins une résistance électrique, **caractérisé en ce que**
lesdits équipements électriques comportent des charges nacelle (5b) reliées à un bus (35) de distribution de tension électrique continue, ledit bus (35) étant relié à un circuit convertisseur de tension (34) alimenté par ledit réseau (17) de distribution, et **en ce que** l'au moins une résistance électrique est destinée à dissiper l'énergie électrique éventuellement renvoyé sur le bus (35) de distribution de tension électrique continue par au moins une partie des charges de la nacelle.

2. Circuit d'alimentation selon la revendication 1, **caractérisé en ce que** ledit circuit de dégivrage (5a) est directement relié audit générateur d'alimentation (27) pour recevoir une tension alternative.

3. Circuit d'alimentation selon la revendication 1 ou 2, **caractérisé en ce que** ledit générateur d'alimentation (27) est un générateur à rotor bobiné dédié.

4. Circuit d'alimentation selon l'une quelconque des revendications 1 à 3, **caractérisé en ce qu'**il comporte un générateur à aimants permanents (28) couplé mécaniquement audit générateur d'alimentation (27), ledit générateur à aimants permanents (28) étant destiné à alimenter au moins un module de régulation électronique du moteur (30).

5. Circuit d'alimentation selon la revendication 4, **caractérisé en ce que** ledit au moins un module de régulation électronique du moteur (30) est relié audit générateur à aimants permanents (28) pour recevoir une tension alternative.

6. Circuit d'alimentation selon la revendication 4 ou 5, **caractérisé en ce que** ledit générateur à aimants permanents (28) alimente plusieurs modules de régulation électronique du moteur (30) via un moyen d'interface (31).

7. Circuit d'alimentation selon l'une quelconque des revendications 4 à 6, **caractérisé en ce que** le générateur d'alimentation (27) est une machine à rotor bobiné et **en ce que** ledit générateur à aimants permanents (28) correspond à un étage à aimants permanents de ladite machine à rotor bobiné.

8. Circuit d'alimentation selon l'une quelconque des revendications 1 à 7, **caractérisé en ce qu'**il comporte
- une entrée (32) reliée au réseau (17) de distribution d'énergie électrique pour recevoir une tension alternative, ledit convertisseur (34) de tension étant relié à ladite entrée (32) pour convertir la tension alternative fournie par le réseau (17) de distribution d'énergie électrique en tension continue, et
- un interrupteur (33) pour délivrer sur le bus (35) de distribution de tension électrique continue une tension fournie par ledit convertisseur (34).

9. Aéronef comportant un circuit d'alimentation en énergie électrique selon l'une quelconque des revendications 1 à 8.

## Claims

1. An electricity power supply circuit in an aircraft, the circuit comprising a network (17) for distributing electricity on board the aircraft and powering electrical equipment (5b) situated in an engine of the aircraft or in the environment of said engine and comprising also a power supply generator integrated in the aircraft engine to power a de-icing circuit the de-icing circuit comprising at least one electrical resistance, **characterized in that**:
the electrical equipment comprises nacelle loads (5b) connected to a DC voltage distribution bus (35), said bus (35) being connected to a voltage converter circuit (34) powered by said distribution network (17), and **in that** said at least one electrical resistance is designed for dissipating electricity possibly returned to the DC voltage distribution bus by at least some of the nacelle loads.

2. A power supply circuit according to claim 1, **characterized in that** said de-icing circuit (5a) is connected directly to said power supply generator (27) to receive an alternating voltage.

3. A power supply circuit according to claim 1 or 2, **characterized in that** said power supply generator (27) is a dedicated wound-rotor generator.

4. A power supply circuit according to any one of claims 1 to 3, **characterized in that** it includes a permanent magnet generator (28) mechanically coupled to said power supply generator (27), said permanent magnet generator (28) being designed to power at least one engine control unit (30) for electronically regulating the engine.

5. A power supply circuit according to claim 4, **characterized in that** said at least one engine control unit (30) is connected to said permanent magnet generator (28) to receive an alternating voltage.

6. A power supply circuit according to claim 4 or 5, **characterized in that** said permanent magnet generator (28) powers a plurality of engine control units (30), the engine control units being powered via an interface circuit (31).

7. A power supply circuit according to any one of claims 4 to 6, **characterized in that** the power supply generator is a wound-rotor machine and said permanent magnet generator corresponds to a permanent magnet stage of said wound-rotor machine.

8. A power supply circuit according to any one of claims 1 to 7, **characterized in that** it includes:
an input (32) connected to the electricity distribution network (17) to receive an alternating voltage, said voltage converter (34) being connected to said input (32) to convert the alternating voltage supplied by the electricity distribution network (17) into a DC voltage; and
a switch (33) for delivering a voltage delivered by said converter (34) to the DC voltage distribution bus (35).

9. An aircraft including an electrical power supply circuit according to any one of claims 1 to 8.

## Patentansprüche

1. Kreislauf zum Versorgen mit elektrischer Energie in einem Luftfahrzeug, der ein Stromverteilungsnetz (17) an Bord des Luftfahrzeugs aufweist, das elektrische Ausrüstungen (5b) versorgt, die sich in einem Motor des Luftfahrzeugs oder in der Umgebung des Motors befinden, und der ferner einen Versorgungsgenerator (27) aufweist, der in den Motor des Luftfahrzeugs integriert ist, um einen Enteisungskreislauf (5a) zu versorgen, wobei der Enteisungskreislauf (5a) mindestens einen elektrischen Widerstand aufweist, **dadurch gekennzeichnet, daß**
die elektrischen Ausrüstungen Kabinenlasten (5b) aufweisen, die mit einem Bus (35) zum Verteilen elektrischer Gleichspannung verbunden sind, wobei der Bus (35) mit einem Spannungswandlerkreislauf (34), der von dem Verteilungsnetz (17) versorgt wird, verbunden ist, und daß der mindestens eine elektrische Widerstand dazu bestimmt ist, die eventuell auf den Bus (35) zur Verteilung elektrischer Gleichspannung zurückgeleitete elektrische Energie über mindestens einen Teil der Lasten der Kabine abzuführen.

2. Versorgungskreislauf nach Anspruch 1, **dadurch gekennzeichnet, daß** der Enteisungskreislauf (5a) direkt mit dem Versorgungsgenerator (27) verbunden ist, um eine Wechselspannung zu erhalten.

3. Versorgungskreislauf nach Anspruch 1 oder 2, **dadurch gekennzeichnet, daß** der Versorgungsgenerator (27) ein dedizierter Generator mit Schleifringanker ist.

4. Versorgungskreislauf nach einem der Ansprüche 1 bis 3, **dadurch gekennzeichnet, daß** er einen Generator mit Dauermagneten (28) aufweist, der mechanisch mit dem Versorgungsgenerator (27) gekoppelt ist, wobei der Generator mit Dauermagneten (28) dazu bestimmt ist, mindestens ein elektronisches Regelmodul des Motors (30) zu versorgen.

5. Versorgungskreislauf nach Anspruch 4, **dadurch gekennzeichnet, daß** das mindestens eine elektronische Regelmodul des Motors (30) mit dem Generator mit Dauermagneten (28) verbunden ist, um eine Wechselspannung zu erhalten.

6. Versorgungskreislauf nach Anspruch 4 oder 5, **dadurch gekennzeichnet, daß** der Generator mit Dauermagneten (28) mehrere elektronische Regelmodule des Motors (30) über ein Schnittstellenmittel (31) versorgt.

7. Versorgungskreislauf nach einem der Ansprüche 4 bis 6, **dadurch gekennzeichnet, daß** der Versorgungsgenerator (27) eine Maschine mit Schleifringanker ist, und daß der Generator mit Dauermagneten (28) einer Stufe mit Dauermagneten der Maschine mit Schleifringanker entspricht.

8. Versorgungskreislauf nach einem der Ansprüche 1 bis 7, **dadurch gekennzeichnet, daß** er aufweist:
- einen Eingang (32), der mit dem elektrischen Energieverteilungsnetz (17) verbunden ist, wobei der Spannungswandler (34) mit dem Eingang (32) verbunden ist, um eine von dem elektrischen Energieverteilungsnetz (17) gelieferte Wechselspannung in Gleichspannung umzuwandeln, und
- einen Schalter (33), um auf den Bus (35) zum Verteilen elektrischer Gleichspannung eine Spannung zu speisen, die von dem Wandler (34) geliefert wird.

9. Luftfahrzeug, das einen Kreislauf zum Versorgen mit elektrischer Energie nach einem der Ansprüche 1 bis 8 aufweist.
